# EUROPÄISCHE PATENTSCHRIFT

(11) **EP 1 368 211 B1**
(45) Veröffentlichungstag und Bekanntmachung des Hinweises auf die Patenterteilung: **18.08.2004**
(21) Anmeldenummer: 01927719.3
(22) Anmeldetag: 12.03.2001
(51) Int. Cl.: B60R 1/072

(54) **MOTORISCHE VERSCHWENKEINRICHTUNG FÜR EINE TRÄGERPLATTE, INSBESONDERE FÜR EINEN KRAFTFAHRZEUGSPIEGEL**
MOTOR-DRIVEN PIVOTING DEVICE FOR A SUPPORT PLATE, ESPECIALLY FOR A MOTOR VEHICLE MIRROR
DISPOSITIF DE PIVOTEMENT MOTORISE POUR UNE PLAQUE SUPPORT, EN PARTICULIER POUR UN RETROVISEUR DE VEHICULE AUTOMOBILE

(43) Veröffentlichungstag der Anmeldung: 10.12.2003
(73) Patentinhaber: Oechsler Aktiengesellschaft, 91522 Ansbach (DE)
(72) Erfinder: WOLF, Wilhelm, 91580 Petersaurach (DE); BOEGELEIN, Josef, 91623 Sachsen (DE); SEIBOTH, Wolfgang, 94438 Bad Windsheim (DE); LANG, Heinrich, 91465 Ergersheim (DE)
(74) Vertreter: Führing, Dieter
(86) Internationale Anmeldenummer: PCT/EP2001/002721
(87) Internationale Veröffentlichungsnummer: WO 2002/072387

(56) Entgegenhaltungen:
- DE-A- 2 708 328
- DE-A- 10 003 028
- FR-A- 2 601 911
- GB-A- 2 146 729
- US-A- 3 549 243
- US-A- 4 540 252
- PATENT ABSTRACTS OF JAPAN vol. 008, no. 276 (M-346), 18. Dezember 1984 (1984-12-18) & JP 59 145640 A (NIPPON DENSO KK), 21. August 1984 (1984-08-21)

## Beschreibung

Die Erfindung betrifft eine motorische Verschwenkeinrichtung gemäß dem Oberbegriff des Hauptanspruches.

Eine Verschwenkeinrichtung der gattungsgemäßen Art ist aus der GB 2 146 729 A vorbekannt in der Bauform einer Spiegel-Trägerplatte mit vier rückseitig an den Ecken eines Quadrates von ihr vorstehenden Stößeln, von denen jeweils ein axial starrer und ein axial federnder symmetrisch beiderseits einer von zwei zueinander orthogonalen Schwenkachsen angeordnet sind. Die freien Stirnenden jeweils dieser zwei Stößel liegen parallel zur Ringachse, bezüglich dieser einander diametral gegenüber, auf der Stimkante eines verdrehbaren Ringes auf, die rampenförmig verläuft. Dadurch wird bei Verdrehen der Ringrampe der eine Stößel angehoben und gleichzeitig der gegenüberliegende abgesenkt, so daß die Platte um die quer zur Verbindungslinie zwischen diesen beiden Stößeln verlauferide Schwenkachse verkippt wird. Ein koaxial dazu verdrehbarer zweiter Ring verkippt die Platte um die andere Schenkachse. Das Verdrehen der Ringe erfolgt mittels eines einzigen Motors, der je nach seiner Drehrichtung über ein Schwenkgetriebe entweder mit einem Zahnkranz am einen Rampenring oder mit einem Zahnkranz am anderen Rampenring in Drehverbindung versetzt wird. Das schränkt allerdings die Kinematik der Verschwenkung der Spiegel-Trägerplatte erheblich ein. Von besonders großem praktischem Nachteil ist darüber hinaus, daß infolge der - bis auf den kurzen Federweg eines der jeweils zwei Stößel - axial starren Abstützung keine Verschwenkung der Platte unter äußerem Einbringen eines Drehmomentes erfolgen kann, so daß derartige im Betrieb oft unvermeidlichen Belastungen leicht zu irreversiblen Verformungen und sogar Zerstörungen führen können.

Eine Verschwenkeinrichtung ähnlicher Art ist aus der EP 0 316 055 vorbekannt in der Bauform eines Gehäuses zur Aufnahme von je einem reversierbaren elektrischen Kleinmotor für den koordinierten Antrieb von zwei stößelartigen Linearstellgliedern, die gegensinnig bezüglich einander aus dem Gehäuse heraus bzw. in dieses eingefahren werden und dadurch die angelenkte Trägerplatte um die Achse mittig quer zur Verbindungslinie zwischen beiden Linearstellgliedern verschwenken. Die Bewegungsübertragung vom jeweiligen Motor zum ihm zugeordneten Linear-Stellglied erfolgt jeweils mittels eines Schneckenantriebs auf der Motorwelle, der eine am Gehäuse axial festgelegte Nuß über ihr Außengewinde verdreht und dadurch das Stellglied linear verlagert, dessen Außengewinde nach Art eines Gewindebolzens konzentrisch mit einem Innengewinde in der Nuß in Eingriff steht.

Das Erfordernis, für diese Schwenkbewegung der Trägerplatte zwei gegensinnig koordiniert wirkende motorische Antriebe einzusetzen, ist allerdings sehr kostenaufwendig. Außerdem ist die Betriebszuverlässigkeit bei nicht genau synchronem Betrieb beeinträchtigt; denn wenn die beiden Linearstellglieder von ihren Motoren nicht exakt gegensinnig bewegt werden, dann erfolgt keine reproduzierbare Verschwenkbewegung der Trägerplatte um die geometrisch vorgegebene Achse, sondern diese erfährt einen seitlichen Versatz.

Vorliegender Erfindung liegt das technische Problem zugrunde, eine gattungsgemäße Verschwenkeinrichtung funktional robuster auszulegen, womit zugleich eine manuelle Verstelleingriffsmöglichkeit eröffnet werden soll.

Diese Aufgabe ist erfindungsgemäß gemäß den wesentlichen im Hauptanspruch angegebenen Merkmalen gelöst. Für die gegensinnige Bewegung der beiden Linearstellglieder reicht ein Motor aus, der eine flache dachförmig zweiflankige Rampe verdreht. Von der jeweilige Flanke werden die beiden die Trägerplatte abstützenden Linearstellglieder infolge mechanischen Eingriffes zwangsläufig synchron gegensinnig bewegt. Dafür verläuft diese aus zwei gegensinnig geneigten Flanken zusammengesetzte Rampe bogenförmig, so daß ihr Antriebsmotor im Innern des die Rampe tragenden Ringes angeordnet sein kann, was einen kompakten Aufbau fördert. Die Rampe ist für jede Flanke nach Art eines flachen Gewindeganges auf einer Mantelfläche des Ringes ausgebildet. Die beiden gegenläufigen Flanken zusammen sind also in der ebenen Abwicklung als dreieckförmig verlaufende Rippen oder Nuten auf einer Mantelfläche des vom Motor verdrehbaren Ringes darstellbar. Die parallel zur Drehachse des Ringes orientierten Linearstellglieder umgreifen quer zu ihrer Längserstreckung und Stellrichtung und somit radial bezüglich des Ringes zangenartig die vorstehende Rippe, bzw. sie greifen in die Nut fingerartig ein. Dabei sind die Linearstellglieder nicht einfach kraftschlüssig gegen Rampengeometrien abgestützt, sondern sie stehen formschlüssig mit ihnen in Eingriff, um im Interesse koordinierter Bewegung die beiden gleichzeitigen aber gegensinnigen Stellhübe gegen die Trägerplatte allein von der Bewegung des einen Motors abhängig zu machen.

Da die Linearstellglieder nur einseitig und dort gelenkig - nämlich hinter der Trägerplatte - gelagert sind, werden sie konstruktiv und dabei vorzugsweise federelastisch radial gegen den Rampenring angedrückt. Wenn die Linearstellglieder nicht nur eine Zange bzw. einen Finger zum Eingriff in die Rampe aufweisen, sondern dafür nach Art einer Zahnstange ausgelegt sind, erbringt das den weiteren Vorteil, die Trägerplatte bedarfsweise durch externe Momenteneinleitung (etwa von Hand) verstellen zu können, weil dann der nicht selbsthemmend profilierte Verzahnungseingriff einfach der Federbelastung entgegen als Kupplung außer Eingriff geraten und durchratschen kann.

Wenn diese Rampe an der Innenmantelfläche des Ringes ausgebildet ist, dann können wie der Motor auch die beiden Linearstellglieder im Innern des Ringes angeordnet sein, was den Gesamtaufbau noch kompakter macht. Vor allem eröffnet das aber die Möglichkeit, um diesen Rampen-Ring außen herum in gleicher Ebene einen weiteren derartigen Ring anzuordnen, nämlich für ein zweidimensionales Verschwenken der Trägerplatte um eine weitere, orthogonal zur bisher betrachteten Achse orientierte Schwenkachse. Dieser äußere Ring ist dann auf seiner Außenmantelfläche mit seiner Rampe aus den beiden gegensinnig geneigten Flanken ausgestattet, weshalb dessen beiden Linearstellglieder, ebenso wie dessen Verstellmotor, nun außerhalb des Ringes angeordnet sind. Die um zwei zueinander senkrechte Achsen verschwenkbare Platte ist dann besonders stabil von vier Gelenkanschlüssen getragen.

Wenn nur eines der beiden Linearstellglieder pro Schwenkachse längsverstellbar und das andere stationär eingebaut ist, erübrigt sich der zickzackförmige oder sinusförmige Flankenverlauf der Rampe, und zur Axialeinstellung des einen Stellgliedes dem anderen gegenüber kann eine innen- bzw. außenverzahnte Gewindebuchse als Ringrampe Anwendung finden. Das erbringt allerdings die Nachteile einer konstruktiv nicht festliegenden sondern ihrerseits verschwenkbaren Schwenkachse und geringerer Dynamik in der Verschwenkung der Träger-Platte.

Zur näheren Erläuterung der Erfindung sowie weiterer ihrer Abwandlungen und Weiterbildungen wird auf die Unteransprüche und auf nachstehende Beschreibung eines in der Zeichnung nicht ganz maßstabsgerecht und auf das Funktionswesentliche abstrahiert skizzierten bevorzugten Ausführungsbeispiels zur erfindungsgemäßen Lösung verwiesen. In der Zeichnung zeigt :
Fig.1 bei abgenommener Gehäusekapsel die getriebliche Anordnung der Verstelleinrichtung in Ansicht gegen die Rückseite der Träger-platte und
Fig.2 in linearer Abwicklung die Profilierung eines Rampenringes zum Verschwenken der Trägerplatte.

Die getriebliche Anordnung der dargestellten Verschwenkeinrichtung 11 ist in eine oberhalb der Darstellebene gelegene Gehäusekapsel eingebaut. Vor dieser ist die verschwenkbare Trägerplatte 12 von zwei Linearstellgliedern 13,13 bzw. 14,14 je Schwenkachse 15 bzw. 16 gehaltert. In der Gehäusekapsel ist wenigstens ein Ring 17 bzw. 18 um eine Zentralachse 19 verdrehbar gelagert. Mit dessen Mantelfläche 20 (bzw. auch 21, nämlich im Falle zweier Ringe 17 und 18) stehen die zugeordneten, parallel zur Achse 19 orientierten Linearstellglieder 13,13 bzw. 14,14 in Eingriff. Der Gehäusekapsel gegenüber sind die dortigen Stimenden der Linearstellglieder 13,13 bzw. 14,14 gelenkig - etwa über Kugelgelenke 22 - an die Rückseite 23 der Trägerplatte 12 angeschlossen. So wird die Träger-platte 12 von der - etwa an einer Kraftfahrzeugkarosserie zu befestigenden - Gehäuseschale über wenigstens einen Ring 17 bzw. 18 und seine beiden Linearstellglieder 13,13 bzw. 14,14 getragen.

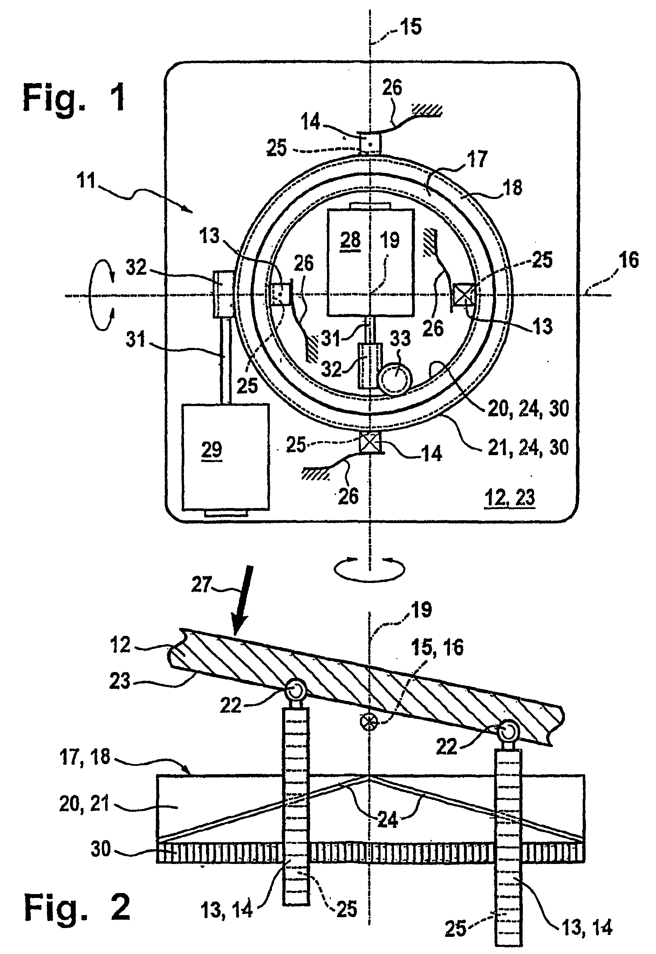

Der Ring 17 bzw. 18 ist auf einer Mantelfläche 20 bzw. 21 mit einer zweillankigen, nämlich dachförmig abgeknickt verlaufenden Rampe 24 profiliert, etwa ausgebildet als radial vorstehende Rippe oder als radial eingestochene Nut. Jede der beiden gegensinnig geneigten Flanken der Rampe 24 ist also als sehr flacher Gewindegang darstellbar. Grundsätzlich können die beiden Rampenneigungen auch einander kreuzen, die Gewindegänge sich also auch über mehr als den in Fig.2 in linearer Abwicklung gezeigten jeweils halben Umfang des Ringes 17 bzw. 18 erstrecken. Wenn ein nicht nur hin und her pendelnder sondern auch kontinuierlich umlaufender Antrieb für den Ring 17 und / oder für den Ring 18 vorgesehen ist, verläuft zweckmäßigerweise der Flankenübergang jeweils an den Knickstellen sanft geschwungen, etwa als sinusähnlicher Verlauf der Rampe 24 über dem Umfang des Ringes 17 oder 18. Entgegen dem Eindruck, der sich aus der linearen Abwicklung der Fig.2 ergeben könnte, führt das Verdrehen des Ringes 17 bzw. 18 um seine Achse 19 - zwecks achsparalleler Linearverschiebung der symmetrisch zur Achse 19 gehalterten Stellglieder 13,14 längs der Rampe 24 - tatsächlich nicht zu einer seitlichen Verlagerung der Schwenkachsen 15,16 in Bezug auf die Trägerplatte 12.

Die Linearstellglieder 13 bzw. 14 sind für den Formschluß zur jeweiligen Rampe 24 mit einer grobprofilierten Verzahnung 25 ausgestattet, die mittels einer gehäusefest abgestützten Feder 26 gegen die Rampe 24 angedrückt wird. Wenn sich die Verzahnung 25 nach Art einer Zahnstange über wenigstens einen Teil der Länge des jeweiligen Stellgliedes 13 bzw. 14 erstreckt, wenn also die Linearstellglieder 13, 14 nach Art von Zahnstangen profiliert sind, dann kann der Ort des Eingriffs in das Profil der Rampe 24 mittels externer Einleitung eines Drehmomentes 27 in die Trägerplatte 12 um deren Schwenkachse 15 bzw. 16 herum verändert werden, indem eine solche externe Längsbelastung des jeweiligen der Stellglieder 13 bzw. 14 der Andruckfeder 26 gegenüber zu vorübergehendem Auskuppeln, nämlich zum Ausheben aus der Verzahnung 25 und Längsverlagerung bis zum Einrasten in die nächst benachbarte Verzahnung 25 führt. So ist eine manuelle Ratschen-Verstellung der Anfangsneigung der Träger-Platte 12 für deren dann darauf aufbauende motorische Verschwenkung realisierbar.

Für das getrieblich stark untersetzte Verdrehen des jeweiligen Ringes 17 bzw. 18 mittels eines schnellaufenden und vorzugsweise umsteuerbaren kleinen Gleichstrommotors 28 bzw. 29 ist der Ring 17 bzw. 18 am einen Stirnrand, also seiner Rampe 24 gegenüber, axial versetzt (oder auf der anderen Mantelfläche 20 bzw. 21) mit einem Zahnkranz 30 ausgelegt. Hier greift der Motor 28 bzw. 29 mit einem auf seiner Antriebswelle 31 angeordneten selbstehemmenden Schneckentrieb 32 außerhalb des äußeren Ringes 18 in diesen unmittelbar bzw. innerhalb des inneren Ringes 17 über ein Zwischenrad 33 ein.

Im Interesse eines gedrängten Aufbaus der Verschwenkeinrichtung 11 ist der Motor 28 vorzugsweise im Innern des Zahnkranzes 30 an der Innenmantelfläche 20 -des Rampen-Ringes 17 quer zu dessen Achse 19 und bevorzugt parallel zur zugeordneten Schwenkachse 15 angeordnet. Deren beiden Linearstellglieder 13-13 sind parallel zur Ringachse 19 orientiert und liegen bezüglich der Ringachse 19 einander diametral gegenüber. Sie stützen sich federbelastet (26) längs einer Erzeugenden radial gegen die Innenmantelfläche 20 des Ringes 17 ab, auf welcher die Rampe 24 ausgebildet ist.

Wenn also etwa der Motor 28 den Ring 17 um die Achse 19 verdreht, hebt die eine der beiden gegensinnig geneigt um diese Achse 19 rotierenden Flanken der Rampe 24 das eine der beiden Linearstellglieder 13-13 parallel zur Achse 19 an, während das diametral gegenüberliegend gegen den Ring 17 anliegende Stellglied 13 gleichzeitig von der anderen Flanke der Rampe 24 parallel zur Achse 19 abgesenkt wird, was zu einem Verschwenken der Träger-Platte 12 um die konstruktiv festliegende, quer durch die zentrale Achse 19 verlaufende Schwenkachse 15 führt.

Wenn die getrieblichen und Antriebs-Elemente für eine Schwenkachse 15 wie skizziert im Innern eines Ringes 17 angeordnet sind, dann kann dieser als zentrale Führung für einen äußeren Ring 18 dienen, an dessen mit der Rampe 24 ausgestatteten Außen-Mantelfläche 21 der Motor 29 und die Linearstellglieder 14 für eine - zur zuvor erwähnten Achse 15 - orthogonale Schwenkachse 16 anliegen.

Dieser Aufbau stellt eine kompakte Verschwenkeinrichtung 11 um zwei Achsen 15/16 unabhängig voneinander dar, bei stabiler Vierpunkt-Lagerug (22) der Träger-Platte 12 über die Linearstellglieder 13-13/14-14 an der Gehäuseschale. Ein gedrängter Aufbau einer zweiachsigen motorischen Verschwenkeinrichtung 11 für eine Träger-Platte 12, insbesondere für einen Kraftfahrzeugspiegel, weist also erfindungsgemäß zwei konzentrisch gelagerte Ringe 17,18 auf, von denen der innere Ring 17 auf seiner Innen-Mantelfläche 20 und der äußere Ring 18 auf seiner Außen-Mantelfläche 21 je mit einer rippen- oder nutartigen Rampe 24 ausgestattet ist, die sich aus zwei in Umfangsrichtung mit sehr geringen gegensinnigen Steigungen aufeinanderfolgenden, gewindegangförmigen Flanken zusammensetzt. Jede dieser Ringrampen 24 ist unabhängig von der anderen über einen umlaufenden Zahnkranz 30 und einen selbsthemmenden Schneckentrieb 32 von einem kleinen Gleichstrommotor 28, 29 verdrehbar. Die Verdrehung der Rampenringe 17, 18 führt jeweils zu gegensinniger Axialverlagerung zweier zahnstangenartiger Linearstellglieder 13-13, 14-14, die - paarweise der Drehachse 19 diametral gegenüber und dabei orthogonal zueinander achsparallel orientiert - parallel zur Drehachse 19 an die Mantelflächen 20 bzw. 21 anliegend mit jeweils einer der beiden gegensinnig geneigten Flanken der Rampen 24 radial in Eingriff stehen und an ihren einander benachbarten, die Ringe 17, 18 axial überragenden Stirnenden über Kugelgelenke 22 die verschwenkbare Trägerplatte 12 an vier Punkten unterstützen; mit externer manueller Einstellmöglichkeit der Trägerplatten-Neigung durch Verratschen der federelastisch gegen die Rampen 24 anliegenden Stellglied-Verzahnungen 25.

## Patentansprüche

1. Motorische Verschwenkeinrichtung (11) für eine Träger-Platte (12), insbesondere für einen Kraftfahrzeugspiegel, die bei zwei einander bezüglich der Schwenkachse (15) diametral gegenüberliegenden rückseitigen Orten gegen eine ringförmig umlaufende Rampe (24) abgestützt ist, die von einem Motor (28) um eine Achse (19) verdrehbar ist, **dadurch gekennzeichnet, daß** an den beiden Orten hinter der Platte (12) die Stirnenden von parallel zu jener Achse (19) sich erstreckenden Linearstellgliedern (13, 13; bzw. 14, 14) gelenkig angeschlossen sind, von denen wenigstens eines (13,13) mit der Rampe (24) formschlüssig aber axial einstellbar in Eingriff steht, indem es mit einer ausrastbaren Verzahnung (25) federelastisch radial bezüglich der Achse (19) gegen die Rampe (24) in Eingriff steht.

2. Verschwenkeinrichtung nach Anspruch 1, **dadurch gekennzeichnet, daß** beide Linearstellglieder (13,13) für eine Schwenkachse (15) mit gegensinnig geneigten Flanken der Rampe (24) in Eingriff stehen.

3. Verschwenkeinrichtung nach Anspruch 2, **dadurch gekennzeichnet, daß** die Rampe (24) als dachförmig verlaufende Rippe ausgebildet ist.

4. Verschwenkeinrichtung nach Anspruch 2, **dadurch gekennzeichnet, daß** die Rampe (24) als dreieckförmig verlaufende Nut ausgebildet ist.

5. Verschwenkeinrichtung nach einem der vorangehenden Ansprüche, **dadurch gekennzeichnet, daß** der die Rampe (24) aufweisende Ring (17) der Rampe (24) gegenüber axial versetzt mit einem Zahnkranz (30) ausgestattet ist, der über einen selbsthemmenden Schneckentrieb (32) vom Motor (28) bewegbar ist.

6. Verschwenkeinrichtung nach einem der vorangehenden Ansprüche, **dadurch gekennzeichnet, daß** die Rampe (24) an der Innen-Mantelfläche (20) des Ringes (17) ausgebildet ist und im Innern des Ringes (17) der Motor (28) quer sowie die Linearstellglieder (13) parallel zur Ring-Achse (19) angeordnet sind.

7. Verschwenkeinrichtung nach einem der Ansprüche 1 bis 5, **dadurch gekennzeichnet, daß** die Rampe (24) an der Außen-Mantelfläche (21) des Ringes (18) ausgebildet ist und außerhalb des Ringes (18) die Linearstellglieder (13) parallel zur Achse (19) angeordnet sind.

8. Verschwenkeinrichtung nach einem der vorangehenden Ansprüche, **dadurch gekennzeichnet, daß** je ein Motor (28, 29) innerhalb und außerhalb zweier konzentrisch ineinander geführter Ringe (17, 18) angeordnet sind, bei denen jeweils parallel zur Achse (19) ein Paar von Linearstellgliedern (13,13) mit einer Rampe (24) an der Innen-Mantelfläche (20) des inneren Ringes (17) und orthogonal dazu ein Paar von Linearstellgliedern (14,14) mit einer Rampe (24) an der Außen-Mantelfläche (21) des äußeren Ringes (18) in Eingriff stehen.

## Claims

1. A motor-driven pivoting device (11) for a support plate (12), especially for a motor vehicle mirror, that is held relative to an annular ramp (24) at two points on its rear side that are situated diametrically opposite of one another referred to the pivoting axis (15), wherein the ramp can be turned about an axis (19) by a motor (28), **characterized in that** the end faces of linear actuators (13, 13; and 14, 14; respectively) that extend parallel to the axis (19) are connected in an articulated fashion at the two points behind the plate (12), wherein at least one of the linear actuators (13, 13) is engaged with the ramp (24) in a form-fitted fashion, however, such that it can be axially adjusted, namely due to the fact that it is elastically engaged with the ramp (24) radially referred to the axis (19) by means of a toothing (25) that can be disengaged.

2. The pivoting device according to Claim 1, **characterized in that** both linear actuators (13, 13) for one pivoting axis (15) are engaged with oppositely inclined flanks of the ramp (24).

3. The pivoting device according to Claim 2, **characterized in that** the ramp (24) is realized in the form of a rib that extends in a roof-shaped fashion.

4. The pivoting device according to Claim 2, **characterized in that** the ramp (24) is realized in the form of a groove that extends in a triangular fashion.

5. The pivoting device according to one of the preceding claims, **characterized in that** the ring (17) containing the ramp (24) is provided with a gear rim (30) that is axially offset relative to the ramp (24) and can be driven by the motor (28) via a self-locking worm drive (32).

6. The pivoting device according to one of the preceding claims, **characterized in that** the ramp (24) is realized on the inner surface (20) of the ring (17), and **in that** the motor (28) is arranged transverse to the ring axis (19) and the linear actuators (13) are arranged parallel to the ring axis inside the ring (17).

7. The pivoting device according to one of Claims 1-5, **characterized in that** the ramp (24) is realized on the outer surface (21) of the ring (18), and **in that** the linear actuators (13) are arranged parallel to the axis (19) outside the ring (18).

8. The pivoting device according to one of the preceding claims, **characterized in that** one respective motor (28, 29) is arranged inside and outside two concentric rings (17, 18), wherein one pair of linear actuators (13, 13) is engaged with a ramp (24) on the inner surface (20) of the inner ring (17) parallel to the axis (19) and one pair of linear actuators (14, 14) is engaged with a ramp (24) on the outer surface (21) of the outer ring (18) orthogonally thereto.

## Revendications

1. Dispositif de pivotement motorisé (11) pour plaque support (12), notamment pour rétroviseur de véhicule automobile, qui s'appuie, à deux endroits situés à l'arrière et diamétralement opposés l'un à l'autre par rapport à l'axe de pivotement (15), contre une rampe (24) périphérique en forme d'anneau qu'on peut faire tourner à l'aide d'un moteur (28) autour d'un axe (19), **caractérisé en ce que** sont raccordées de manière articulée, aux deux endroits situés derrière la plaque (12), les extrémités frontales d'éléments de positionnement linéaires (13, 13 ou 14, 14) s'étendant parallèlement à cet axe (19), dont au moins un (13, 13) est en prise avec la rampe (24) par liaison géométrique mais de manière réglable axialement du fait qu'il est en prise, au moyen d'une denture décliquetable (25), avec une élasticité de ressort radialement par rapport à l'axe (19) contre la rampe (24).

2. Dispositif de pivotement selon la revendication 1, **caractérisé en ce que** les deux éléments de positionnement linéaires (13, 13) pour un axe de pivotement (15) sont en prise avec des flancs inclinés en sens inverse de la rampe (24).

3. Dispositif de pivotement selon la revendication 2, **caractérisé en ce que** la rampe (24) est conçue sous forme d'une nervure s'étendant en forme de toit.

4. Dispositif de pivotement selon la revendication 2, **caractérisé en ce que** la rampe (24) est conçue sous forme d'une gorge s'étendant en forme de triangle.

5. Dispositif de pivotement selon l'une quelconque des revendications précédentes, **caractérisé en ce que** l'anneau (17) présentant la rampe (24) est équipé, avec un décalage axial par rapport à la rampe (24), d'une couronne dentée (30) qui peut être déplacée à l'aide d'un engrenage à vis sans fin autobloquant (32) par le moteur (28).

6. Dispositif de pivotement selon l'une quelconque des revendications précédentes, **caractérisé en ce que** la rampe (24) est réalisée sur la surface d'enveloppe interne (20) de l'anneau (17) et qu'à l'intérieur de l'anneau (17), le moteur (28) est disposé transversalement et les éléments de positionnement linéaires (13) sont disposés parallèlement à l'axe de l'anneau (19).

7. Dispositif de pivotement selon l'une quelconque des revendications 1 à 5, **caractérisé en ce que** la rampe (24) est réalisée sur la surface d'enveloppe externe (21) de l'anneau (18) et que les éléments de positionnement linéaires (13) sont disposés parallèlement à l'axe (19) à l'extérieur de l'anneau (18).

8. Dispositif de pivotement selon l'une quelconque des revendications précédentes, **caractérisé en ce qu**'il est disposé à chaque fois un moteur (28, 29) à l'intérieur et à l'extérieur de deux anneaux (17, 18) guidés concentriquement l'un dans l'autre, pour lesquels respectivement une paire d'éléments de positionnement linéaires (13, 13) est en prise, parallèlement à l'axe (19), avec une rampe (24) sur la surface d'enveloppe interne (20) de l'anneau intérieur (17) et, orthogonalement à celui-ci, une paire d'éléments de positionnement linéaires (14, 14) est en prise avec une rampe (24) sur la surface d'enveloppe externe (21) de l'anneau extérieur (18).
